# EUROPÄISCHE PATENTSCHRIFT

(11) **EP 2 574 642 B1**
(45) Veröffentlichungstag und Bekanntmachung des Hinweises auf die Patenterteilung: **20.11.2013**
(21) Anmeldenummer: 11183074.1
(22) Anmeldetag: 28.09.2011
(51) Int. Cl.: C08L 69/00

(54) **Flammgeschützte PC/ABS-Zusammensetzungen mit guter Schlagzähigkeit, Fließfähigkeit und Chemikalienbeständigkeit**
Flame-retardant PC/ABS compounds with good impact strength, flowability and chemical resistance
Compositions de PC/ABS ignifuges ayant de bonnes propriétés anti-chocs, une bonne fluidité et une bonne résistance aux produits chimiques

(43) Veröffentlichungstag der Anmeldung: 03.04.2013
(73) Patentinhaber: Bayer Intellectual Property GmbH, 40789 Monheim (DE)
(72) Erfinder: Taschner, Vera, 50823 Köln (DE); Eckel, Thomas, 41540 Dormagen (DE); Wittmann, Dieter, 51375 Leverkusen (DE); Klewpatinond, Paul, Chongnonsee 10120 Yannawa, Bangkok (TH); Priest, Pierre, 201206 Shanghai (CN)
(74) Vertreter: BIP Patents

(56) Entgegenhaltungen:
- EP-A1- 0 363 608
- EP-A2- 0 063 769
- EP-A2- 0 494 602

## Beschreibung

Die vorliegende Erfindung betrifft flammwidrige Formmassen aus Polycarbonaten und Pfropfpolymerisaten, die neben einem guten Fließverhalten eine gute (Kerb)Schlagzähigkeit und eine hohe Chemikalienbeständigkeit bei einer UL94V-0 Klassifizierung bei 1,5 mm aufweisen. Diese Formmassen eignen sich insbesondere für dünnwandige Gehäuseteile im Elektro- und Elektronikbereich.

In US 5120778 wird eine flammgeschützte Polycarbonat-Zusammensetzungen mit verbesserter Schlagzähigkeit beschrieben, die Polycarbonatharz, halogeniertes Phthalimid und halogeniertes Oligocarbonat als Flammschutzmittel, PTFE (Polytetrafluorethylen) als Antidrippingmittel und einen pfropf-modifizierten Olefin-Kautschuk enthalten, wobei der pfropf-modifizierte Olefin-Kautschuk ein Pfropf-Polymer einer oder mehrerer ungesättigter Dicarbonsäuren oder eines Säureanhydrids derselben auf einer olefinischen Copolymer-Pfropfbasis ist.

Aus EP 494602 A2 sind pigmentierte, nicht-flammgeschützte thermoplastische PC/ABS Formmassen mit 1-9% eines gepfropften olefinischen Copolymers bekannt, wobei das gepfropfte olefinische Copolymer ein Pfropf-Polymer einer oder mehrerer ungesättigter Dicarbonsäuren oder des Anhydrids der Säure(n) auf einem Skelett eines olefinischen Copolymers ist.

In US 5087524 werden thermoplastische Harzzusammensetzungen enthaltend aromatisches Polycarbonat und 0.5-5% eines Anhydrid-haltigen Modifiers, wobei die speziellen anhydridhaltigen olefinischen Terpolymere sowie die Zusammensetzungen gemäß der vorliegenden Erfindung nicht offenbart werden.

Aus den Anmeldungen JP 2001294742 A, JP 08188708 A, JP 3212468 B2 und JP 63156850 sind nicht flammgeschützte Polycarbonatzusammensetzungen enthaltend Ethylen-Propylen-Maleinsäureanhydrid-Copolymere beschrieben.

Aufgabe der vorliegenden Erfindung war es somit, Polycarbonat-Formmassen bereitzustellen, die eine gute Kerbschlagzähigkeit, Fließfähigkeit und Chemikalienbeständigkeit bei gleichzeitig gutem Flammschutzverhalten aufweisen.

Überraschenderweise wurde nun gefunden, dass die o. g. Eigenschaften erhalten werden, wenn ein Ethylen-Propylen-Octen-Maleinsäureanhydrid-Copolymer in flammgeschützten PC/ABS-Blends eingesetzt wird.

Die so zusammengesetzten Formmassen zeichnen durch verbesserte mechanische Eigenschaften wie hohe Kerbschlagzähigkeit in Verbindung mit einer guten Fließfähigkeit und hoher Chemikalienbeständigkeit aus, ohne negative Auswirkungen auf das Flammschutzverhalten zu zeigen.

Gegenstand der Erfindung sind flammwidrige, thermoplastische Formmassen enthaltend
A) 50,0 bis 90,0 Gew.-Teilen, vorzugsweise 52,0 bis 80,0 Gew.-Teilen, besonders bevorzugt 54,0 bis 75,0 Gew.-Teilen mindestens eines aromatischen Polycarbonats,
B) 4,0 bis 14,0 Gew.-Teilen, vorzugsweise 5,0 bis 12,0 Gew.-Teilen, besonders bevorzugt 7,0 bis 11,0 Gew.-Teilen mindestens eines Pfropfpolymierisats,
C) 0,0 - 15,0 Gew.-Teile, bevorzugt 1,0 - 10,0 Gew.-Teile, besonders bevorzugt 2,0 - 8,0 Gew.-Teile Vinyl(Co)Polymerisat),
D) 1,0 - 20,0 Gew.-Teile, bevorzugt 5,0 - 18,0 Gew.-Teile, weiter bevorzugt 6,0 - 16,0 Gew.-Teile, besonders bevorzugt 9,0 - 15,0 Gew.-Teile, mindestens eines phosphorhaltigen Flammschutzmittels,
E) 0,5 bis 5,0 Gew.-Teilen, bevorzugt bevorzugt 0,75 bis 3,5 Gew.-Teilen, weiter bevorzugt 0,5 bis 2,5 Gew.-Teilen, besonders bevorzugt 1,0 bis 2,0 Gew.-Teilen, mindestens eines kautschukfreies anhydridmodifiziertes alpha-Olefin-Terpolymer,
F) 0,0 bis 25,0 Gew.-Teilen, bevorzugt 5,0 bis 20,0 Gew.-Teilen, besonders bevorzugt 12,0 bis 18,0 Gew.-Teilen mindestens eines Füllstoffs,
G) 0 - 10,0 Gew.-Teile, bevorzugt 0,5 - 8,0 Gew.-Teile, besonders bevorzugt 1,0 - 6,0 Gew.-Teile weitere übliche Additive,
wobei die Summer der Gewichtsteile der Komponenten A) bis F) sich zu 100 Gewichtsteilen addiert.

Besonders bevorzugte Formmassen enthalten als Komponente G) neben optionalen weiteren Additiven ein fluoriertes Polyolefin in 0,05 bis 5,0 Gew.-Teilen, vorzugsweise 0,1 bis 2,0 Gew.-Teile, besonders bevorzugt 0,3 bis 1,0 Gew.-Teilen.

Besonders bevorzugte Formmassen enthalten als Komponente G) neben optionalen weiteren Additiven ein Entfonnungsmittel, z.B. Pentaerythrittetrastearat, in 0,1 bis 1,5 Gew.-Teilen, vorzugsweise 0,2 bis 1,0 Gew.-Teile, besonders bevorzugt 0,3 bis 0,8 Gew.-Teilen.

Besonders bevorzugte Formmassen enthalten als Komponente G) neben optionalen weiteren Additiven mindestens einen Stabilisator, beispielsweise ausgewählt aus der Gruppe der sterisch gehinderten Phenole, Phosphite sowie Mischungen daraus und besonders bevorzugt Irganox® B900, in 0,01 bis 0,4 Gew.-Teilen, vorzugsweise 0,03 bis 0,3 Gew.-Teile, besonders bevorzugt 0,06 bis 0,2 Gew.-Teilen.

Weiterhin ist die Kombination der drei zuvorgenannten Additive, PTFE, Pentaerythrittetrastearat und Irganox B900, als Komponente G besonders bevorzugt.

### Komponente A

Erfindungsgemäß geeignete aromatischec Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 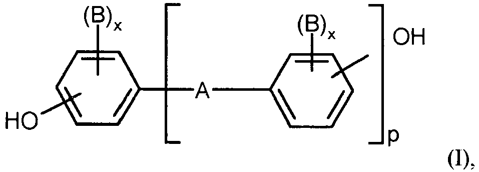 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 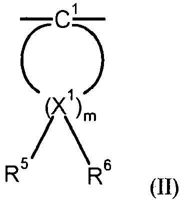 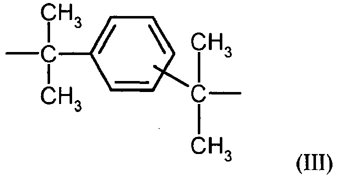
B jeweils C₁bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydrowphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen durch GPC (Gelpermeationschromatographie mit Polycarbonatstandard) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihy-droxyphenyl)-propan, Tetra-(4-[4-hydroxyphenyl-isopropyl]-phenoxy)-methan, 1,4-Bis[4,4'-dihy-droxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykonderisat vorliegen.

Die thermoplastischen, aromatischen Polycarbonate und Polyestercarbonate können allein oder im beliebigen Gemisch eingesetzt werden.

### Komponente B

Die Pfropfpolymerisate B umfassen z.B. Pfropfpolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind.

Bevorzugte Polymerisate B sind partiell vernetzt und besitzen Gelgehalte (gemessen in Toluol) von über 20 Gew.-%, vorzugsweise über 40 Gew.-%, insbesondere über 60 Gew.-%.

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Bevorzugte Pfropfpolymerisate B umfassen Pfropfpolymerisate aus:
B.1) 5 bis 95, vorzugsweise 30 bis 80 Gew.-Teile, einer Mischung aus
B.1.1) 50 bis 95 Gew.-Teilen Styrol, α-Methylstyrol, methylkemsubstituiertem Styrol, C₁-C₈-Alkylmethacrylat, insbesondere Methylmethacrylat, C₁-C₈-Alkylacrylat, insbesondere Methylacrylat, oder Mischungen dieser Verbindungen und
B.1.2) 5 bis 50 Gew.-Teilen Acrylnitril, Methacrylnitril C₁-C₈-Alkylmethacrylaten, insbesondere Methylmethacrylat, C₁-C₈-Alkylacrylat, insbesondere Methylacrylat, Maleinsäureanhydrid, C₁-C₄-alkyl- bzw. -phenyl-N-substituierte Maleinimide oder Mischungen dieser Verbindungen auf
B.2) 5 bis 95, vorzugsweise 20 bis 70 Gew.-Teilen einer kautschukhaltigen Pfropfgrundlage.

Vorzugsweise hat die Pfropfgrundlage eine Glasübergangstemperatur unter -10°C.

Besonders bevorzugt ist eine Pfropfgrundlage auf Basis eines Polybutadienkautschuks.

Bevorzugte Pfropfpolymerisate B sind z.B. mit Styrol und/oder Acrylnitril und/oder (Meth-)Acrylsäurealkylestern gepfropfte Polybutadiene, Butadien/Styrol-Copolymierisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzuge Pfropfpolymerisate B sind Pfropfpolymerisate, die durch Pfropfreaktion von
I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester und 50 bis 90, vorzugsweise 65 bis 80 Gew.-%, bezogen auf Gemisch, Styrol auf
II. 30 bis 90, vorzugsweise 40 bis 85, insbesondere 50 bis 80 Gew.-%, bezogen auf Pfropfprodukt, eines Butadien-Polymerisats mit mindestens 50 Gew.-%, bezogen auf II, Butadienresten als Pfropfgrundlage.
erhältlich sind.

Der Gelanteil dieser Pfropfgrundlage II beträgt vorzugsweise mindestens 70 Gew.-% (in Toluol gemessen), der Pfropfgrad G 0,15 bis 0,55 und der mittlere Teilchendurchmesser d₅₀ des Pfropfpolymerisats B 0,05 bis 2, vorzugsweise 0,1 bis 0,6 µm.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Die Glasübergangstemperatur wird mittels dynamischer Differenz-Thermoanalyse (DSC) gemäß der Norm DIN EN 61006 bei einer Heizrate von 10 K/min mit Definition der Tg als Mittelpunkttemperatur (Tangentenmethode) bestimmt.

Weitere bevorzugte Pfropfpolymerisate B sind z.B. auch Pfropfpolymerisate aus
(a) 20 bis 90 Gew.-%, bezogen auf B, Acrylatkautschuk als Pfropfgrundlage und
(b) 10 bis 80 Gew.-%, bezogen auf B, mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Pfropfgrundlage aus Acrylatkautschukt hat bevorzugt eine Glasübergangstemperatur von kleiner als -20°C, vorzugsweise kleiner -30°C.

Die Acrylatkautschuke (a) der Polymerisate B sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören C₁-C₈-Alkylester, beispielsweise Methyl-, Ethyl-, n-Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen und einem Gelgehalt von mindestens 40 % (gemessen in Dimethylformamid), wie sie in den Offenlegungsschriften DE 37 04 657, DE 37 04 655, DE 36 31 540 und DE 36 31 539 beschrieben werden.

### Komponente C

Die Komponente C umfasst ein oder mehrere thermoplastische Vinyl(Co)Polymerisate.

Geeignet sind als Vinyl(Co)Polymerisate Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 1 50 bis 99, vorzugsweise 60 bis 80 Gew.-Teilen Vinylaromaten und/oder kemsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
C.1.2 1 bis 50, vorzugsweise 20 bis 40 Gew.-Teilen Vinylcyanide (ungesättigte Nitrile) wie Acrylnitril und Methacrylnitril und/oder (Meth)Acryl-säure-(C₁-C₈)-Alkylester, wie Methylmethacrylat. n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate sind harzartig, thermoplastisch und kautschukfrei. Besonders bevorzugt ist das Copolymerisat aus C.1.1 Styrol und C.1.2 Acrylnitril.

Die (Co)Polymerisate gemäß C sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000 g/mol, besonders bevorzugt zwischen 100.000 und 150.000 g/mol.

In einer besonders bevorzugten Ausführungsform ist C ein Copolymerisat aus 77 Gew.-% Styrol und 23 Gew.-% Acrylnitril mit einem gewichtsgemittelten Molekulargewicht Mw von 130.000 g/mol.

### Komponente D

Phosphorhaltige Flammschutzmittel D im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (V) 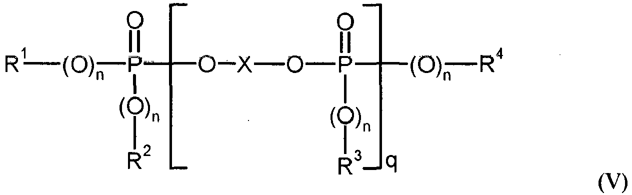 worin
R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu acht Etherbindungen enthalten kann, bedeuten.
Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenylsowie die entsprechenden bromierten und chlorierten Derivate davon.
X in der Formel (V) bedeutet bevorzugt einen ein- oder mehrkernigen aromatischen Rest mit 6 bis 30 C-Atomen. Dieser leitet sich bevorzugt von Diphenolen der Formel (I) ab.
n in der Formel (V) kann, unabhängig voneinander, 0 oder 1 sein, vorzugsweise ist n gleich 1.
q steht für ganzzahlige Werte von 0 bis 30, bevorzugt 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00, und besonders bevorzugt von 1,08 bis 1,60.
X steht besonders bevorzugt für 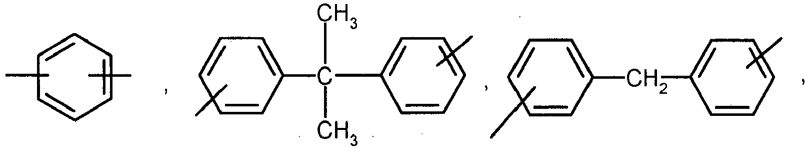 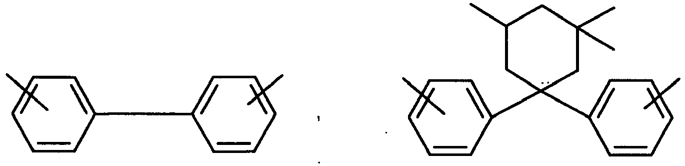 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Phosphorverbindungen der Formel (V) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (V), die sich vom Bisphenol A ableiten, ist insbesondere bevorzugt.

Höchst bevorzugt als Komponente D ist Bisphenol-A basierendes Oligophosphat gemäß Formel (Va).

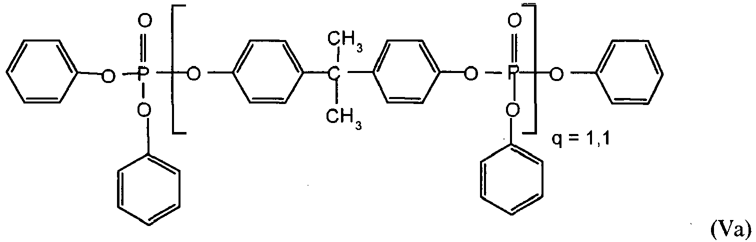

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Als erfindungsgemäße Komponente D können auch Mischungen von Phosphaten mit unterschiedlicher chemischer Struktur und/oder mit gleicher chemischer Struktur und verschiedenem Molekulargewicht eingesetzt werden.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Wenn die erfindungsgemäßen Zusammensetzungen flammhemmend ausgestattet sind, ist vorzugsweise zusätzlich ein Antidrippingmittel, vorzugsweise Polytetrafluorethylen (PTFE), enthalten.

### Komponente E

Die Komponente E im Sinne der vorliegenden Erfindung ist ein kautschukfreies anhydridmodifiziertes alpha-Olefin-Terpolymer, wobei das Anhydrid ein ungesättigtes Carbonsäureanhydrid ist

Das Anhydrid ist vorzugsweise ausgewählt aus der Gruppe, die Maleinsäureanhydrid, Phthalsäureanhydrid, Fumarsäureanhydrid und. Itaconsäureanhydrid sowie deren Mischungen umfaßt.

Besonders bevorzugt ist das Anhydrid Maleinsäureanhydrid.

Das alpha-Olefin-Terpolymer enthält vorzugsweise Bausteine ausgewählt aus der Gruppe, die besteht aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, sowie Gemische aus diesen.

Besonders bevorzugt enthält das Terpolymer als Bausteine Ethylen, 1-Propen und 1-Octen.

Das kautschukfreie anhydridmodifizierte Terpolymer ist dadurch charakterisiert, daß die Zusammensetzung
E1) 90,0-98,0 Gew-%, vorzugsweise 92,0-97,5 Gew.-%, besonders bevorzugt 94,0-97,0 Gew.-% Terpolymer und
E2) 2,0-10,0 Gew.-%, vorzugsweise 2,5 -8,0 Gew.-%, und besonders bevorzugt 3,0-6,0 Gew.-% Anhydrid enthält.

Das kautschukfreie anhydridmodifizierte Terpolymer hat vorzugsweise ein Molekulargewicht Mw von 2000-10000 g/mol, bevorzugt 2500 - 8000 g/mol, besonders bevorzugt 3000 - 6000 g/mol bestimmt durch GPC (Gelpermeationschromatographie) in Trichlorbenzol als Lösungsmittel mit Polystyrol als Standard.

Der olefinische Teil E1) des anhydridmodifizierten Terpolymers ist bevorzugt dadurch gekennzeichnet, dass
der Ethylenanteil 96,0-80,0 Gew.-%, weiter bevorzugt 92,0-84,0 Gew.-%;
der Propylenanteil 2,0-10,0 Gew.-%, weiter bevorzugt 4,0-8,0 Gew.-%; und
der Octenanteil 2,0-10,0 Gew.-%, weiter bevorzugt 4,0-8,0 Gew.-%, ist.

### Kompenente F)

Die Komponente F umfaßt verstärkende und nicht verstärkende Füllstoffe. Beispiele für verstärkende Füllstoffe sind Glaskugeln, Glimmer, Silikate, Quarz, Talkum, Titandioxid, Wollastonit, sowie pyrogene oder gefällte Kieselsäuren mit BET-Oberflächen von mindestens 50 m²/g (nach DIN 66131/2).

Die genannten Kieselsäurefüllstoffe können hydrophilen Charakter haben oder nach bekannten Verfahren hydrophobiert sein. Hierzu sei beispielsweise auf die deutsche Offenlegungsschrift DE 38 39 900 A1 verwiesen, deren diesbezügliche Offenbarung Teil der vorliegenden Anmeldung sein soll.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips, Polytetrafluorethylenpulver.

Des Weiteren können als verstärkende Füllstoffe faserige Komponenten, wie Glasfasern und Kunststofffasern, eingesetzt werden. Die BET-Oberfläche dieser Füllstoffe liegt vorzugsweise unter 50 m²/g (nach DIN 66131/2).

Bevorzugte Füll- und Verstärkungsstoffe sind Talk, Glasfasern, Silikate, Quarz, Titandioxid und Wollastonit.

Besonders bevorzugt ist Talk als Füllstoff.

In einer alternativen Ausführungsform können feinstteilige anorganische Pulver zum Einsatz kommen, die vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe mit wenigstens einem Element ausgewählt aus Sauerstoff, Wasserstoff, Schwefel, Phosphor, Bor, Kohlenstoff, Stickstoff oder Silicium, bestehen.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugt bestehen die feinstteiligen anorganischen Pulver aus Oxiden, Phosphaten, Hydroxiden, vorzugsweise aus TiO₂, SiO₂, SnO₂, ZnO, ZnS, Böhmit, ZrO₂, Al₂O, Aluminiumphosphate, Eisenoxide, ferner TiN, WC, AlO(OH), Sb₂O₃, Eisenoxide, NaSO₄, Vanadiumoxide, Zinkborat, Silicate wie Al-Silikate, Mg-Silikate, ein-, zwei-, dreidimensionale Silikate. Mischungen und dotierte Verbindungen sind ebenfalls verwendbar.

Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind hydrathaltige Aluminiumoxide, z.B. Böhmit oder TiO₂.

Die durchschnittlichen Teilchendurchmesser der Nanopartikel sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al., Kolloid-Z. und Z. Polymere 250 (1972), S. 782-796.

Die anorganischen Verbindungen können als Pulver, Pasten, Sole Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Formmassen eingearbeitet werden, beispielsweise durch direktes Kneten oder Extrudieren von Formmassen und den feinstteiligen anorganischen Pulvern. Bevorzugte Verfahren stellen die Herstellung eines Masterbatch, z.B. in Flammschutzadditiven und wenigstens einer Komponente der erfindungsgemäßen Formmassen in Monomeren oder Lösungsmitteln, oder die Cofällung von einer thermoplastischen Komponente und den feinstteiligen anorganischen Pulvern, z.B. durch Cofällung einer wäßrigen Emulsion und den feinstteiligen anorganischen Pulvern dar, gegebenenfalls in Form von Dispersionen, Suspensionen, Pasten oder Solen der feinstteiligen anorganischen Materialien.

### Komponente G (weitere Additive)

Die Zusammensetzung kann weitere übliche Polymeradditive wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl Sulfonate oder Polyamid-haltige Polymere) sowie Farbstoffe und Pigmente enthalten.

Insbesondere wird als Antidrippingmittel Polytetrafluorethylen (PTFE) oder PTFE-haltige Zusammensetzungen wie beispielsweise Masterbatche von PTFE mit styrol- oder methylmethacrylat enthaltenden Polymeren oder Copolymeren, als Pulver oder als koagulierte Mischung, z.B. mit Komponente B, eingesetzt.

Die als Antidrippingmittel eingesetzten fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1000, vorzugsweise 0,08 bis 20 µm. Im allgemeinen haben die fluorierten Polyolefine eine Dichte von 1,2 bis 2,3 g/cm³. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z.B. US-Patent 2 393 967). Je nach Einsatzform kann die Dichte dieser Materialien zwischen 1,2 und 2,3 g/cm³, die mittlere Teilchengröße zwischen 0,05 und 1000 µm liegen.

Die erfindungsgemäß bevorzugte fluorierte Polyolefine haben mittlere Teilchendurchmesser von 0,05 bis 20 µm, vorzugsweise 0,08 bis 10 µm, und eine Dichte von 1,2 bis 1,9 g/cm³.

Geeignete, in Pulverform einsetzbare fluorierte Polyolefine D sind Tetrafluorethylenpolymerisate mit mittleren Teilchendurchmesser von 100 bis 1000 µm und Dichten von 2,0 g/cm³ bis 2,3 g/cm³. Geeignete Tetrafluorethylenpolymerisat-Pulver sind handelsübliche Produkte und werden beispielsweise von der Fa. DuPont unter dem Handelsnamen Teflon^{®} angeboten.

Als Stabilisatoren gemäß Komponente G werden bevorzugt sterisch gehinderte Phenole und Phosphite oder deren Gemische, wie beispielsweise Irganox© B900 (BASF), verwendet. Pentaerythrittetrastearat wird bevorzugt als Entformungsmittel verwendet.

Die erfindungsgemäßen Formmassen, enthaltend die Komponenten A bis F und gegebenenfalls weiteren bekannten Zusätzen G wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 330°C in üblichen Aggregaten wie Innenknetem, Extrudern und Doppelwellenschnecken schmelzcompoundiert oder schmelzextrudiert.

Gegenstand der vorliegenden Erfindung ist somit auch ein Verfahren zur Herstellung von thermoplastischen Formmassen, enthaltend die Komponenten A bis F sowie gegebenenfalls Additive G, die nach erfolgter Vermischung bei Temperaturen von 200 bis 330°C in gebräuchlichen Aggregaten schmelzcompoundiert oder schmelzextrudiert werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie TV- und HiFi-Geräte, Kaffeemaschinen, Mixer, Büromaschinen, wie Monitore oder Drucker, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Gehäuseteilen im Elektro- und Elektronikbereich.

Eine weitere Form der Verarbeitung ist die Herstellung von Formkörpern durch Blasformen oder durch Tiefziehen aus vorher hergestellten Platten oder Folien.

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert. Die fertigen Granulate werden auf einer Spritzgussmaschine zu den entsprechenden Probekörpern verarbeitet (Massetemperatur 240 °C , Werkzeugtemperatur 80°C, Fließfrontgeschwindigkeit 240 mm/s).

Zur Charakterisierung der Eigenschaften der Probekörper wurden folgende Methoden angewandt:
Die **Fließfähigkeit** wurde nach ISO 11443 **(Schmelzeviskosität)** bestimmt.
Die **Kerbschlagzähigkeit** ak wurde gemessen nach ISO 180/1A an einem einseitig angespritzten gekerbten Prüfstab der Dimension 80x10x4 mm
Die **Schlagzähigkeit** ak wurde gemessen nach ISO 180/1U an einem einseitig angespritzten ungekerbten Prüfstab der Dimension 80x10x4 mm
Die **Schmelzefließfähigkeit** (MVR) wird beurteilt anhand der Schmelzevolumenfließrate (MVR) gemessen gemäß ISO 1133 bei einer Temperatur von 240°C und mit einer Stempellast von 5 kg.
Das **Brandverhalten** wird nach UL 94V an Stäben der Abmessung 127 x 12,7 x 1,5 mm gemessen.
Das **ESC-Verhalten** wurde gemäß **ISO** 4599 (Environmental Stress Cracking (ESC)-Test bei 2,4% Randfaserdehnung) in Hydrauliköl Energol HLP-150 gemessen.

Die folgenden Beispiele dienen der weiteren Erläuterung der Erfindung.

### Beispiele

### Komponente A1

Lineares Polycarbonat auf Basis Bisphenol-A mit einem gewichtsgemittelten Molekulargewicht M̅ _{w} von 27500 g/mol (bestimmt durch GPC in Dichlormethan mit Polycarbonat als Standard).

### Komponente A-2

Lineares Polycarbonat auf Basis Bisphenol-A mit einem gewichtsgemittelten Molekulargewicht M̅ _{w} von 20000 g/mol (bestimmt durch GPC in Dichlormethan mit Polycarbonat als Standard).

### Komponente B-1

ABS-Pfropfpolymerisat mit Kern-Schale-Struktur, hergestellt durch Emulsions-Polymerisation von 50 Gew.-% bezogen auf das ABS-Polymerisat einer Mischung aus 33 Gew.-% Acrylnitril und 67 Gew.-% Styrol in Gegenwart von 50 Gew.-% bezogen auf das ABS-Polymerisat eines teilchenförmig vernetzten Polybutadienstyrolkautschuks (Styrolgehalt des Kautschuks: 10%) (mittlerer Teilchendurchmesser d₅₀ = 0,32 µm).

### Komponente B-2

ABS-Pfropfpolymerisat mit Kern-Schale-Struktur, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks (mittlerer Teilchen-durchmesser d₅₀ = 0,35 µm).

### Komponente B-3

ABS-Polymerisat hergestellt durch Masse-Polymerisation von 82 Gew.-% bezogen auf das ABS-Polymerisat einer Mischung aus 24 Gew.-% Acrylnitril und 76 Gew.-% Styrol in Gegenwart von 18 Gew.-% bezogen auf das ABS-Polymerisat eines Polybutadien-Styrol-Blockcopolymerkautschuks mit einem Styrolgehalt von 26 Gew.-%. Das gewichtsgemittelte Molekulargewicht Mw des freien SAN-Copolymeranteils im ABS-Polymerisat beträgt 80000 g/mol (gemessen per GPC in THF). Der Gelgehalt des ABS-Polymerisats beträgt 24 Gew.-% (gemessen in Aceton).

### Komponente C

Copolymerisat aus 77 Gew.-% Styrol und 23 Gew.-% Acrylnitril mit einem gewichtsgemittelten Molekulargewicht Mw von 130000 g/mol (bestimmt durch GPC), hergestellt nach dem Masseverfahren.

### Komponente D

### Bisphenol-A basierendes Oligophosphat

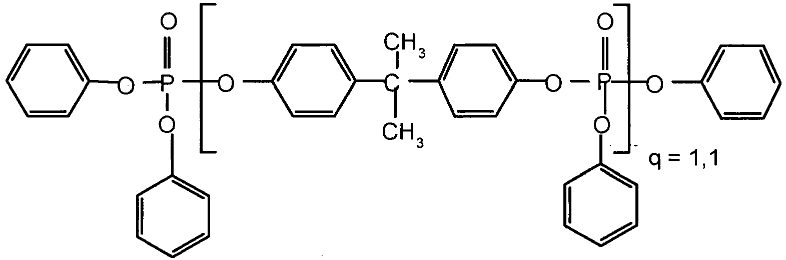

### Komponente E

Ethylen-Propylen-Octen-Maleinsäureanhydrid-Copolymer (Ethylen:Propylen:Octen 87:6:7), CAS-Nr. 31069-12-2, mit Molekulargewicht M_{w} 5000 g/mol, Dichte 940 kg/m³, Säurezahl 60 mg KOH/g, Maleinsäureanhydridanteil 4,4% bezogen auf das Copolymer E.

### Komponente F

HTP Ultra 5C, Talk der Firma Imifabi S.p.A. mit einem MgO-Gehalt von 31 Gew.-%, einem SiO₂-Gehalt von 61,5 Gew.-% und einem Al₂O₃-Gehalt von 0,4 Gew.-%. Teilchengröße d50 von 1,3 µm.

### Komponente G-1

Koagulierte Mischung von Emulsionen fluorierter Polyolefine mit Emulsionen eines Copolymerisats auf Styrol-Acrylnitril-Basis (Cycolac INP 449 der Fa. Sabic).

### Komponente G-1a

CFP 6000 N, Polytetrafluorethylen-Pulver (Hersteller: Du Pont, Genf, Schweiz)

### Komponente G-2

Pentaerythrittetrastearat als Gleit-/Entformungsmittel

### Komponente G-3

Phosphitstabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)phenol)

**Tabelle 1: Zusammensetzung und Eigenschaften der Formmassen**

| | | **1 (Vgl.)** | **2** | **3** | **4 (Vgl.)** |
|---|---|---|---|---|---|
| **Rezeptur** | **Einheit** | | | | |
| Komponente A-1 | % | 58 | 57 | 56 | 55 |
| Komponente B-1 | % | 9,7 | 9,7 | 9,7 | 9,7 |
| Komponente C | % | 3 | 3 | 3 | 3 |
| Komponente D | % | 13 | 13 | 13 | 13 |
| Komponente E | % | 0 | 1 | 2 | 3 |
| Komponente F | % | 15 | 15 | 15 | 15 |
| Komponente G-1 | % | 0,8 | 0,8 | 0,8 | 0,8 |
| Komponente G-2 | % | 0,4 | 0,4 | 0,4 | 0,4 |
| Komponente G-3 | % | 0,1 | 0,1 | 0,1 | 0,1 |
| | | | | | |

| **Messungen** | | | | | |
|---|---|---|---|---|---|
| ak (ISO 180/1A) 240°C/RT | kJ/m² | 7 | 12 | 21 | 28 |
| Schlagzähigkeit (ISO 180/1U) 240°C/RT | kJ/m² | 97 | 136 | 174 | 168 |
| Viskositätsfunktion 260°C [ 1000 s-1] | Pas | 181 | 178 | 174 | 145 |
| Viskositätsfunktion 260°C [ 1500 s-1] | Pas | 150 | 148 | 143 | 121 |
| | cm³/10mi | | | | |
| MVR 240°C/ 5Kg | n | 10 | 10 | 10 | 10 |
| ESC in Hydrauliköl Energol HLP- 150 bei 2.4% Randfaserdehnung:: | | | | | |
| Zeit bis zum Bruch | h | 41 | 70 | 143 | > 168 |
| UL 94 V 1.5 mm Bewertung | | V-0 | V-0 | V-0 | V-1 |
| UL 94 V 1.5mm Gesamt- Nachbrennzeit | s | 13 | 18 | 34 | 66 |

Aus Tabelle 1 ist ersichtlich, dass die Zusammensetzungen der Beispiele 2 und 3 mit 1% - 2% Ethylen-Propylen-Maleinsäureanhydrid-Copolymer die erfindungsgemäße Aufgabe lösen, d.h. eine Kombination aus guter (Kerb)Schlagzähigkeit, Fließfähigkeit und Chemikalienbeständigkeit aufweisen, bei einer UL94V-0 Klassifizierung bei 1,5 mm.

**Tabelle 2: Zusammensetzung und Eigenschaften der Formmassen**

| | | **5 (Vgl.)** | **6** | **7** | **8** | **9 (Vgl.)** |
|---|---|---|---|---|---|---|
| **Rezeptur** | **Einheit** | | | | | |
| Komponente A-1 | % | 38,5 | 38,5 | 38,5 | 38,5 | 38,5 |
| Komponente A-2 | % | 33,4 | 33,4 | 33,4 | 33,4 | 33,4 |
| Komponente B-2 | % | 4,9 | 4,9 | 4,9 | 4,9 | 4,9 |
| Komponente B-3 | % | 5,6 | 5,6 | 5,6 | 5,6 | 5,6 |
| Komponente C | % | 7,4 | 6,4 | 5,9 | 5,4 | 4,4 |
| Komponente D | % | 9,4 | 9,4 | 9,4 | 9,4 | 9,4 |
| Komponente E | % | 0 | 1 | 1,5 | 2 | 3 |
| Komponente G-1a | % | 0,3 | 0,3 | 0,3 | 0,3 | 0,3 |
| Komponente G-2 | % | 0,4 | 0,4 | 0,4 | 0,4 | 0,4 |
| Komponente G-3 | % | 0.1 | 0,1 | 0,1 | 0,1 | 0,1 |
| | | | | | | |

| **Messungen** | | | | | | |
|---|---|---|---|---|---|---|
| ak (ISO 180/1A 240°C/RT | kJ/m² | 13 | 16 | 17 | 17 | 27 |
| Viskositätsfunktion 260°C [ 1000 s-1] | Pas | 163 | 157 | 147 | 131 | 91 |
| Viskositätsfunktion 260°C [ 1500 s-1] | Pas | 132 | 126 | 120 | 109 | 77 |
| | cm³/10m | | | | | |
| MVR 240°C/ 5Kg | in | 24 | 26 | 27 | 30 | 31 |
| ESC in Toluol/Isopropanol 60:40 bei 2.4% Randfaserdehnung: | | | | | | |
| Zeit bis zum Bruch | min:sec | 2:31 | 3:14 | 4:29 | 7:48 | 8:50 |
| UL 94 V 1.5 mm Bewertung | | V-1 | V-1 | V-1 | V-2 | n.b. |
| UL 94 V 1.5 mm Gesamt-Nachbrennzeit | s | 120 | 113 | 95 | 32 | > 170 |

Aus Tabelle 2 ist ersichtlich, dass die Zusammensetzungen der Beispiele 6 bis 8 mit 1% - 2% Ethylen-Propylen-Maleinsäureanhydrid-Copolymer die erfindungsgemäße Aufgabe lösen, d.h. eine Kombination aus guter (Kerb)Schlagzähigkeit, Fließfähigkeit und Chemikalienbeständigkeit aufweisen, bei einer UL94V-1 bzw. V-2 Klassifizierung bei 1,5 mm

## Patentansprüche

1. Flammwidrige, thermoplastische Formmassen enthaltend
A) 50,0 bis 90,0 Gew.-Teile mindestens eines aromatischen Polycarbonats,
B) 4,0 bis 14,0 Gew.-Teile mindestens eines Pfropfpolymerisats,
C) 0,0 bis 15,0 Gew.-Teile mindestens eines Vinyl(Co)Polymerisats,
D) 1,0 bis 20,0 Gew.-Teile mindestens eines phosphorhaltigen Flammschutzmittels,
E) 0,5 bis 5,o Gew.-Teile mindestens ein kautschukfreies anhydridmodifiziertes alpha-Olefin-Terpolymer,
F) 0,0 bis 25,0 Gew.-Teile mindestens eines Füllstoffs,
G) 0,0 - 10,0 Gew.-Teile, weitere übliche Additive,
wobei die Summe der Gewichtsteile der Komponenten A) bis F) sich zu 100 Gewichtsteilen addiert.

2. Formmassen gemäß Anspruch 1, **dadurch gekennzeichnet, daß** Komponente
E) in einem Anteil von 1,0 bis 2,0 Gew.-Teilen enthalten ist.

3. Formmassen gemäß Anspruch 1 oder 2, **dadurch gekennzeichnet, daß** Komponente
F) in einem Anteil von 12,0 bis 18,0 Gew.-Teilen enthalten ist.

4. Formmassen gemäß einem der Ansprüche 1 bis 3, **dadurch gekennzeichnet, daß** Komponente
G) in einem Anteil von 0,5 bis 2,0 Gew.-Teilen enthalten ist.

5. Formmassen gemäß Anspruch 1, **dadurch gekennzeichnet, daß** das Anhydrid ausgewählt ist aus der Gruppe, die Maleinsäureanhydrid, Phthalsäureanhydrid, Fumarsäureanhydrid und. Itaconsäureanhydrid sowie deren Mischungen umfaßt.

6. Formmassen gemäß Anspruch 5, **dadurch gekennzeichnet, daß** das Anhydrid Maleinsäureanhydrid ist.

7. Formmassen gemäß Anspruch 5 oder 6, **dadurch gekennzeichnet, daß** das alpha-Olefin-Terpolymer Bausteine enthält ausgewählt aus der Gruppe, die aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, sowie Gemische aus diesen besteht.

8. Formmassen gemäß Anspruch 5, **dadurch gekennzeichnet, daß** das kautschukfreie anhydridmodifizierte Terpolymer
E1) 90,0-98,0 Gew-% Terpolymer und
E2) 2,0-10,0 Gew.-% Anhydrid
enthält.

9. Formmassen gemäß einem der vorhergehenden Ansprüche, **dadurch gekennzeichnet, daß** das Terpolymer aus Ethylen-, 1-Propen- und 1-Octen-Bausteinen besteht.

10. Formmassen gemäß Anspruch 8 oder 9, **dadurch gekennzeichnet, daß** der olefinische Teil E1) des anhydridmodifizierten Terpolymers **dadurch gekennzeichnet ist, daß**
der Ethylenanteil 96,0-80,0 Gew.-%;
der Propylenanteil 2,0-10,0 Gew.-%; und
der Octenanteil 2,0-10,0 Gew.-% ist.

11. Formmassen gemäß einem der vorhergehenden Ansprüche, **dadurch gekennzeichnet, daß** das kautschukfreie anhydridmodifizierte Terpolymer ein Molekulargewicht Mw von 2000-10000 g/mol besitzt.

12. Formmassen gemäß einem der vorhergehenden Ansprüche, **dadurch gekennzeichnet, daß** als Füllstoff F) Talk eingesetzt wird.

13. Formmassen nach Anspruch 1, **dadurch gekennzeichnet, daß** das phosphorhaltiges Flammschutzmittel (D) ein Flammschutzmittel der allgemeinen Formel (V) 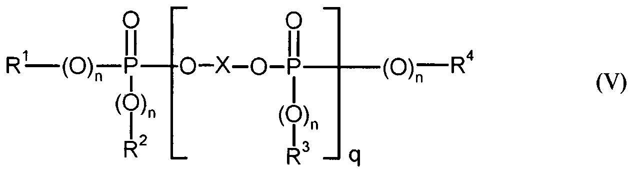 worin
R¹, R², R³ und R⁴, unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
n unabhängig voneinander, 0 oder 1
q 0,80 bis 5,00 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

14. Verwendung der Formmassen gemäß Anspruch 1 zur Herstellung von Formkörpern.

15. Formkörper hergestellt aus Formmassen gemäß Anspruch 1.

## Claims

1. Flame-retardant, thermoplastic moulding compositions containing
A) 50.0 to 90.0 parts by weight of at least one aromatic polycarbonate,
B) 4.0 to 14.0 parts by weight of at least one graft polymer,
C) 0.0 to 15.0 parts by weight of at least one vinyl (co)polymer,
D) 1.0 to 20.0 parts by weight of at least one phosphorus-containing flame retardant,
E) 0.5 to 5.0 parts by weight of at least one rubber-free anhydride-modified alpha-olefin terpolymer,
F) 0.0 to 25.0 parts by weight of at least one filler,
G) 0.0 - 10.0 parts by weight of other conventional additives,
the sum of the parts by weight of components A) to F) adding up to 100 parts by weight.

2. The moulding compositions according to Claim 1, **characterised in that** component
E) is contained in a proportion of 1.0 to 2.0 parts by weight.

3. The moulding compositions according to Claim 1 or 2, **characterised in that** component
F) is contained in a proportion of 12 0 to 18 0 parts by weight.

4. The moulding compositions according to one of Claims 1 to 3, **characterised in that** component
G) is contained in a proportion of 0 5 to 2 0 parts by weight

5. The moulding compositions according to Claim 1, **characterised in that** the anhydride is selected from the group comprising maleic anhydride, phthalic anhydride, fumaric anhydride and itaconic anhydride and mixtures thereof

6. The moulding compositions according to Claim 5, **characterised in that** the anhydride is maleic anhydride

7. The moulding compositions according to Claim 5 or 6, **characterised in that** the alpha-olefin terpolymer contains building blocks selected from the group consisting of ethylene, 1-propene, 1-butene, 1-isobutene, 1-pentene, 1-hexene, 1-heptene, 1-octene, 1-nonene, 1-decene, 1-undecene, 1-dodecene, 1-tridecene, 1-tetradecene, 1-octadecene, 1-nonadecene and mixtures of these

8. The moulding compositions according to Claim 5, **characterised in that** the rubber-free anhydride-modified terpolymer contains
E1) 90 0-98 0 wt.% terpolymer and
E2) 2 0-10 0 wt.% anhydride.

9. The moulding compositions according to one of the preceding claims, **characterised in that** the terpolymer consists of ethylene, 1-propene and 1-octene building blocks

10. The moulding compositions according to Claim 8 or 9, **characterised in that** the olefinic part E1) of the anhydride-modified terpolymer is **characterised in that**
the ethylene portion is 96 0-80 0 wt.%,
the propylene portion is 2 0-10.0 wt.%; and
the octene portion is 2.0-10 0 wt.%.

11. The moulding compositions according to one of the preceding claims, **characterised in that** the rubber-free anhydride-modified terpolymer possesses a molecular weight Mw of 2000-10000 g/mol.

12. The moulding compositions according to one of the preceding claims, **characterised in that** talc is used as filler F)

13. The moulding compositions in accordance with Claim 1, **characterised in that** the phosphorus-containing flame retardant (D) is a flame retardant of the general formula (V) 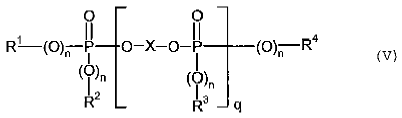 wherein
R¹, R², R³ and R⁴, independently of one another, each denote optionally halogenated C₁ to C₈ alkyl, C₅ to C₆ cycloalkyl, C₆ to C₂₀ aryl or C₇ to C₁₂ aralkyl each optionally substituted by alkyl, preferably C₁ to C₄ alkyl, and/or halogen, preferably chlorine or bromine,
n independently of one another, denotes 0 or 1,
q denotes 0 80 to 5 00 and
X denotes a mononuclear or polynuclear aromatic residue with 6 to 30 C atoms or a linear or branched aliphatic residue with 2 to 30 C atoms, which can be OH-substituted and can contain up to 8 ether bonds.

14. Use of the moulding compositions according to Claim 1 for the production of mouldings.

15. Mouldings produced from moulding compositions according to Claim 1.

## Revendications

1. Matières à mouler thermoplastiques difficilement inflammables, contenant
A) 50,0 à 90,0 parties en poids d'au moins un polycarbonate aromatique,
B) 4,0 à 14,0 parties en poids d'au moins un polymérisat greffé,
C) 0,0 à 15,0 parties en poids d'au moins un (co)polymérisat vinylique,
D) 1,0 à 20,0 parties en poids d'au moins un agent ignifuge phosphoré,
E) 0,5 à 5,0 parties en poids d'au moins un terpolymère d'alpha-oléfine modifié avec un anhydride, sans caoutchouc,
F) 0,0 à 25,0 parties en poids d'au moins une charge,
G) 0,0 - 10,0 parties en poids d'autres additifs usuels,
la somme des parties en poids des composants A) à F) étant égale à 100 parties en poids.

2. Matières à mouler selon la revendication 1, **caractérisées en ce que** le composant
E) est contenu en une proportion de 1,0 à 2,0 parties en poids.

3. Matières à mouler selon la revendication 1 ou 2, **caractérisées en ce que** le composant
F) est contenu en une proportion de 12,0 à 18,0 parties en poids.

4. Matières à mouler selon l'une quelconque des revendications 1 à 3, **caractérisées en ce que** le composant
G) est contenu en une proportion de 0,5 à 2,0 parties en poids.

5. Matières à mouler selon la revendication 1, **caractérisées en ce que** l'anhydride est choisi dans le groupe qui comprend l'anhydride maléique, l'anhydride phtalique, l'anhydride fumarique et l'anhydride itaconique ainsi que des mélanges de ceux-ci.

6. Matières à mouler selon la revendication 5, **caractérisées en ce que** l'anhydride est l'anhydride maléique.

7. Matières à mouler selon la revendication 5 ou 6, **caractérisées en ce que** le terpolymère d'alpha-oléfine contient des éléments structuraux choisis dans le groupe qui consiste en éthylène, 1-propène, 1-butène, 1-isobutène, 1-pentène, 1-hexéne, 1-heptène, 1-octène, 1-nonène, 1-décène, 1-undécène, 1-dodécène, 1-tridécène, 1-tétradécène, 1-octadécène, 1-nonadécène, ainsi qu'en mélanges de ceux-ci.

8. Matières à mouler selon la revendication 5, **caractérisées en ce que** le terpolymère modifié avec un anhydride, sans caoutchouc, contient
E1) 90,0-98,0 % en poids de terpolymère et
E2) 2,0-10,0 % en poids d'anhydride.

9. Matières à mouler selon l'une quelconque des revendications précédentes, **caractérisées en ce que** le terpolymère est constitué d'éléments structuraux éthylène, 1-propène et 1-octène.

10. Matières à mouler selon la revendication 8 ou 9, **caractérisées en ce que** la partie oléfinique E1) du terpolymère modifié avec un anhydride est **caractérisée en ce que**
la proportion d'éthylène est de 96,0-80,0 % en poids ;
la proportion de propylène est de 2,0-10,0 % en poids ; et
la proportion d'octène est de 2,0-10,0 % en poids.

11. Matières à mouler selon l'une quelconque des revendications précédentes, **caractérisées en ce que** le terpolymère modifié avec un anhydride, sans caoutchouc, a une masse moléculaire Mw de 2 000 - 10 000 g/mole.

12. Matières à mouler selon l'une quelconque des revendications précédentes, **caractérisées en ce qu'**on utilise comme charge F) du talc.

13. Matières à mouler selon la revendication 1, **caractérisées en ce que** l'agent ignifuge phosphoré (D) est un agent ignifuge de formule générale (V) 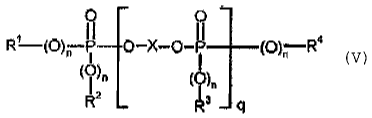 dans laquelle
R¹, R², R³ et R⁴ représentent, indépendamment les uns des autres, un groupe alkyle en C₁-C₈ chaque fois éventuellement halogéné, un groupe cycloalkyle en C₅-C₆, aryle en C₆-C₂₀ ou aralkyle en C₇-C₁₂ chacun éventuellement substitué par alkyle, de préférence alkyle en C₁-C₄, et/ou halogéno, de préférence chloro, bromo,
n représente chaque fois indépendamment 0 ou 1,
q vaut 0,80 à 5,00 et
X représente un radical aromatique mono- ou polynucléaire ayant de 6 à 30 atomes de carbone, ou un radical aliphatique linéaire ou ramifié ayant de 2 à 30 atomes de carbone, qui peut être substitué par OH et comporter jusqu'à 8 liaisons éther.

14. Utilisation des matières à mouler selon la revendication 1, pour la production de corps moulés.

15. Corps moulé produit à partir de matières à mouler selon la revendication 1.
